# NEW EUROPEAN PATENT SPECIFICATION

(11) **EP 0 500 714 B2**
(45) Date of publication and mention of the opposition decision: **14.01.1998**
(45) Mention of the grant of the patent: 11.05.1994
(21) Application number: 90917208.2
(22) Date of filing: 09.11.1990
(51) Int. Cl.: F16F 9/50, B60G 17/015

(54) **ARRANGEMENT FOR SEMI-ACTIVE OR ACTIVE CONTROL OF DAMPING MEMBERS IN A VEHICLE SUSPENSION SYSTEM**
REGELUNGSVORRICHTUNG FÜR SEMIAKTIVE ODER AKTIVE DÄMPFUNGSELEMENTE IN EINEM FAHRZEUGAUFHÄNGUNGSSYSTEM
AGENCEMENT DE COMMANDE SEMI ACTIVE OU ACTIVE D'ELEMENTS D'AMORTISSEMENT DANS LE SYSTEME DE SUSPENSION D'UN VEHICULE

(30) Priority: 13.11.1989 SE 8903787
(43) Date of publication of application: 02.09.1992
(73) Proprietor: SAAB-SCANIA AKTIEBOLAG, 151 87 Södertälje (SE)
(72) Inventor: HULT, Olle, S-125 44 Hägersten (SE)
(74) Representative: Holmborn, Erland Karl
(86) International application number: SE9000727
(87) International publication number: WO9107607

(56) References cited:
- EP-A- 174 914
- EP-A- 262 886
- EP-A- 270 893
- DE-C- 351 503
- Schanz, Günther W.: "Sensoren-Fühler der Messtechnik": e. Handbuch der Messwertaufnahme für den Praktiker", Heidelberg: Hüthig 1986, ISBN 3-7785-1129-7

## Description

The invention relates to an arrangement for controlling the damping members in a vehicle suspension system as a function of the movement between the undamped and damped mass in accordance with the preamble of the Patent Claim. Such an arrangement is known from document EP-A-174 914.

### Prior art

In suspension systems controlled semi-actively or actively, it is already known to use different types of sensors for detecting the position, speed or acceleration of the undamped and damped masses in the system.

As a function of the mutual relationship of the detected parameters, the damping members arranged in the suspension system are controlled semi-actively between different levels of damping capacity in order to obtain the least possible throughput and transmission of the movement of the undamped mass to the damped mass. Alternatively, the damping members can be controlled actively by pressurising or evacuating the chamber of the shock absorbers as a function of detected parameters.

In German Patent Application DE-3,518,503 a solution is shown in which accelerometers are used for controlling the shock absorbers. The accelerometers are in this case arranged both on the undamped mass, the wheel, and on the damped mass, the bodywork.

European Patent application EP-A-174 914 shows an arrangement where relative linear displacements between two members are detected. One of the members rotably supports a rotor. A flexible member is connected to the rotor and to the other member in such a way as to cause rotation of the rotor when the members move away from each other. A return spring tends to rotate the roter in the opposite direction when the members move towards each other. The angular position of the rotor relative to the member that it is supported by and hence the two members relative position are detected by electrical sensor means.

Other solutions in which the position/speed indicators are arranged between the undamped and damped mass for controlling the shock absorbers are shown in Patent Applications EP-A-262,886 and EP-A-270,893.

In cases where accelerometers have been used, these have often shown low sensitivity at low-frequency disturbances of small amplitude. If such low-frequency disturbances also are to be detected, this means that the sensitivity and complexity of the accelerometers must be increased, with a consequent increase in the cost of the sensors.

With other types of position/speed sensors which are used, for example, in EP-A-262,886 and EP-A-270,893, other disadvantages were obtained, since the position indicators themselves were placed parallel to the spring system and were exposed to an unfavourable environment in the form of spraying dirt. Moving the sensors away from the spring area itself meant that a space had to be reserved in the bodywork itself corresponding to the maximum spring movement as a rod must pass through the sensor itself during the spring movement.

### Object of the invention

An object of the present invention is to obtain, in an arrangement for controlling shock absorbers either actively or semi-actively, a simple and inexpensive sensor for detecting the movement between the undamped and damped mass.

Another object is to obtain a sensor which does not need to lie parallel over the spring distance and in addition does not require too great a space in connection with the damped mass or alternatively undamped mass.

Another object is to obtain a sensor which can be mounted on or dismounted from the respective mass in a simple manner, either as a subsequent fitting on the finished vehicle or in the event of a shock absorber replacement.

Another object is to obtain a sensor which is capable of detecting low-frequency disturbances between undamped and damped mass at a low cost. Another object is to obtain a sensor which can be adapted simply to different configurations of spring system with different distances between the damped and undamped mass.

To these ends, the arrangement according to the invention is characterised by the features stated in the characterising clause of the Claim. Other characterising features emerge from the following description of an embodiment of the arrangement according to the invention. In the description, reference is made to the attached figures.

### Brief description of the figures

Figure 1 shows diagrammatically a spring system,
Figure 2 shows a sensor according to the invention in a cross- section through the sensor housing 15 and the bracket 16 with the parts 20, 21, 23, 24 exposed,
Figure 3 shows the sensor in a cross-section 3-3 through the housing 15 and the bracket 16 from Figure 2 with corresponding parts exposed, and
Figure 4 shows the sensor in a cross-section 4-4 through the housing 15 from Figure 2 with the concealed outer contour of the magazine 20 shown in broken lines.

### Description of an exemplary embodiment

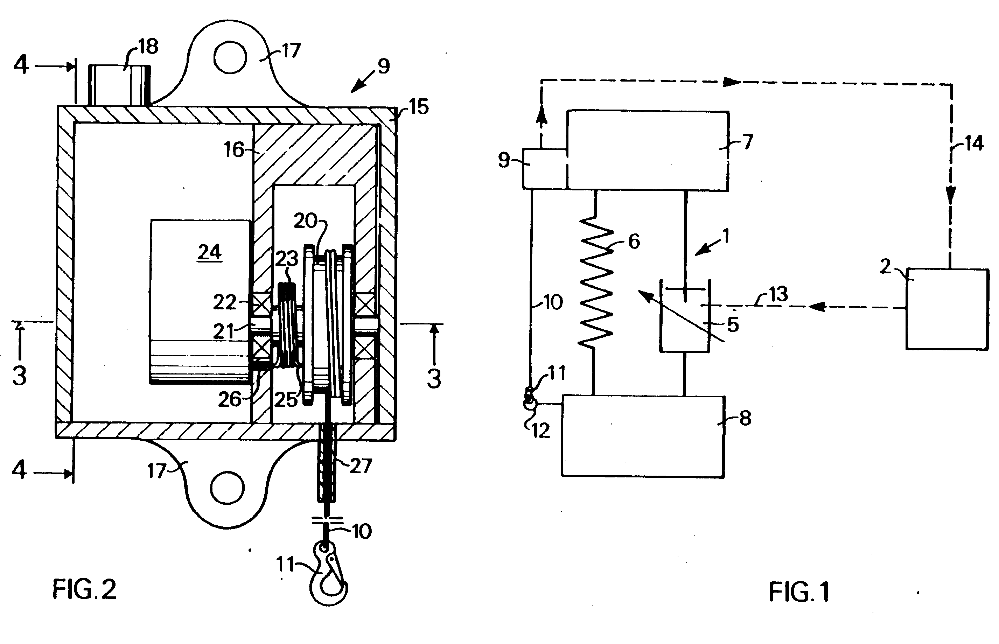

Figure 1 shows an arrangement according to the invention for controlling damping members in a vehide suspension system. The suspension system 1 consists of an adjustable shock absorber 5 and a parallel-coupled spring member 6. The shock absorber 5 and the spring member 6 are arranged between a mass 7 wnich will be insulated with respect to disturbance impulses from the mass 8. The mass 7 is referred to in a conventional manner as the damped mass and the mass 8 as the undamped mass. The function of the shock absorber 5 is regulated by means of a control unit 2 via control signals through line 13. In order for the shock absorber 5 to be controlled as a function of the movement between the masses 7, 8, a sensor arrangement 9-12 is coupled between the masses. The sensor 9 transmits signals to the control unit 2 via a signal line 14 as a function of the speed, position and direction of the movement. The spring member 6 in Figure 1 is shown diagrammatically as a coil spring, but in fact it can consist of other types of spring members, such as pneumatic bellows springs, leaf springs or the like. The adjustable shock absorber 5 can either be of a semi-active type. whose intrinsic damping capacity is adjustable, or of an active type, whose active damping capacity is regulated by means of controlled pressurising or evacuating by external flow control of the chambers of the shock absorber.

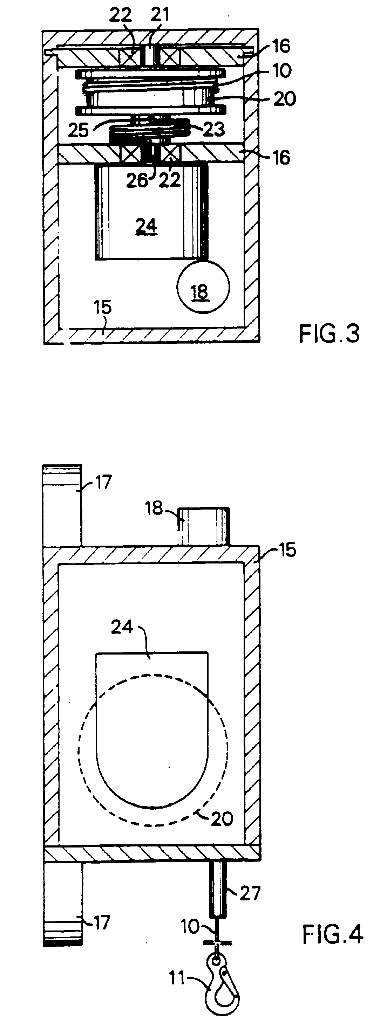

According to the invention, a sensor 9 is used which is arranged on one of the masses 7 and which is coupled via a wire 10 to the second mass 8. The wire 10 is anchored to the second mass 8 by means of a catch 11 in an eye 12 arranged in this mass 8. The sensor 9 is shown in greater detail in Figures 2-4 and consists of an optical pulse transmitter 24 which converts a rotational movement to an electric pulse train. The pulse transmitter 24 is coupled to a shaft 21 on which there is arranged a wire pulley 20 which is rotationally fixed to the shaft and which is spring-loaded towards a bracket 16 arranged in the sensor housing 15.

The shaft 21 is held in the bracket 16 via ball bearings 22 and is connected, fixed in terms of rotation, to a code disc (not shown) arranged in the optical pulse transmitter. The optical pulse transmitter 24 is screwed securely on the bracket by means of screws (not shown) and is separated from the wire pulley by one of the ball bearings. The pulse transmitter 24 can advantageously consist of an optical pulse transmitter of the Hewlett Packard HEADS-5500 type. This type of position indicator has hitherto been used to a great extent in, among other things, writing equipement. The pulse transmitter comprises a rotatable code disc with narrow gaps, which codes disc passes between a light-emitting diode and a set of photodiodes. The lightfrom the light-emitting diode is focused towards the gaps on the code disc by means of a lens and, with photodiodes on the other side of the code disc, a pulse is obtained each time a gap rotates past the photodiodes. By means of a suitable arrangement of the photodiodes, two pulse trains are obtained which identify in which direction the code disc is rotating, and the speed is given by means of the pulse frequency and the acceleration by means of derivation.

The sensor housing 15 is designed with a pair of securing lugs 17 which permit anchoring on either mass 7, 8 by means of conventional securing elements (not shown). The pulse transmitter 24 is coupled to the control unit 2 via an electric signal line. The sensor housing 15 is therefore provided with a cable passage 18.

Wound around the wire pulley 20 is a wire 10 whose end is anchored in the pulley 20. By virtue of the fact that the shaft 21 of the wire pulley 20 is held in ball bearings 22 in the bracket 16 and the fact that the wire pulley 20 is simultaneously acted upon by the coil spring 23, whose one spring end 26 is anchored in the bracket 16 and whose other spring end 25 is anchored in the pulley 20, the wire 10 rolled around the pulley 20 can be drawn out from the pulley 20 under the counteraction of the spring 23. In this way the wire 10 is at all times tensioned both during its reeling-out and reeling-in around the wire pulley 20.

The sensor housing 15 can in this way be assembled in a simple manner securely on either of the masses 7, 8, after which the wire 10 is drawn out and is hooked securely by means of the catch 11 in the eye 12 arranged on the second mass. By replacing the wire or shortening the wire, the sensor can be adapted in a simple manner to different types of spring systems with different distances between the anchoring points for the sensor housing 15 and the eye 12 of the wire 10. For example, the same sensor can be used for both a front wheel suspension and a rear wheel suspension, despite the fact that there may be differences in the attachment points and the spring distance.

The arrangement is advantageously used in semi-actively or actively spring-mounted lorry cabins where the cabin obtains full suspension relative to the lorry frame via a spring system which is arranged in each one of the four corners of the cabin. With an arrangement according to the invention; the sensor 9 can be placed in a protected position in the cabin or on the floor of the cabin, where the wire, optionally via deflection rollers, is drawn down to an anchoring point secured on the lorry frame.

The above description of an exemplary embodiment of the arrangement according to the invention must not be regarded as limiting the inventive concept as set out in the patent claims. The invention can be modified within the scope of the patent daims in a number of embodiments. The wire mentioned in the patent daims can of course consist of a conventional multi-filament wire or a single-filament wire of metal material, alloys, polymer material or other materials of comparable properties. Chains also can be compared with a wire from the point of view of functioning in the present invention, and in such cases the magazine advantageously consists of a chain drive. The spring member 23 specified in the claims can also consist of a pneumatic or hydraulic spring arrangement which can operate functionally in a similar manner to a coil spring.

## Claims

1. Arrangement for controlling damping members incorporated in a suspension system between an undamped and a damped mass (7, 8), consisting of at least one set of an adjustable damping member (5) and a parallel-coupled spring member (6), which damping member (5) is regulated by means of a signal representing a movement, detected by a sensor (9), between the undamped (8) and the damped (7) mass, the sensor (9) being arranged securely on one (7) of the two masses (7, 8), having a chain or a wire which is wound on a rotatable magazine (20) with. pretensioning of a spring member (23) acting counter to the rotation of the magazine (20), and having the chain or wire at its one end to be drawn from the magazine (20) designed to be secured by means of coupling members (11,12) on the second mass (8), and the rotatable magazine (20) being designed to act on a pulse transmitter (24) in proportion to the rotation of the magazine (20), which pulse transmitter (24) generates an electrical signal for controlling the damping member (5) *characterised in* that the undamped mass (7) is a lorry frame and the damped mass (8) is a lorry cabin, that the sensor has a housing (15) arranged inside the lorry cabin (8) and the coupling members are secured to the lorry frame, which sensor is electrically connected to a control unit (2), through which the damping member is controlled, in which housing a bracket (16) is securely arranged, which bracket holds by means of bearing members a shaft, on which shaft the magazine (20) and one end of the spring member (23) are fixed, the other end of the spring member being locked to the bracket, the pulse transmitter (24) being securely arranged on the bracket for detecting the turning of the shaft and the bracket having a bearing member separating the pulse transmitter from the magazine, which magazine, pulse transmitter, spring member, bracket and shaft all are incorporated in the housing.

## Patentansprüche

1. Anordnung zum Regeln von Dämpfungsgliedern, die in einer Aufhängung zwischen einer gedämpften Masse (7,8) eingebaut sind und die wenigstens einen Satz aus einem einstellbaren Dämpfungsglied (5) und einer parallel dazu angeordneten Feder (6) enthält, welches Dämpfungsglied (5) mittels einem Signal das durch einen Sensor ermittelten Bewegung zwischen der ungedämpften (8) und der gedämpften Masse (7) entspricht, wobei der Sensor an einer der zwei Massen (7,8) fest angebracht ist und eine Kette oder einen Draht enthält, die bzw. der auf ein drehbares Magazin (20) aufgewickelt ist, wobei ein der Drehung des Magazins (20) entgegenwirkendes Federglied (23) vorgespannt ist, und die Kette oder der Draht sich an ihrem bzw. seinem einen, von dem Magazin (20) wegzuziehenden Ende mittels Kuppelgliedern (11,12) an der zweiten Masse (8) befestigen läßt, und das drehbare Magazin (20) so gestaltet ist, daß es proportional zur Drehung des Magazins (20) auf einem Impulsgeber (24) wirkt, welcher ein elektrisches Signal zum Regeln des Dämpfungsglieds (5) erzeugt, dadurch gekennzeichnet, daß die ungedämpfte Masse (7) ein Lkw-Rahmen ist und die gedämpfte Masse (8) eine Lkw-Kabine ist, daß der Sensor ein Gehäuse hat das in der Lkw-Kabine angeordnet ist und daß die Kuppelglieder zum Lkw-Rahmen befestigt sind, welcher Sensor mit einer Steuereinheit (2) elektrisch verbunden ist, durch welche das Dämpfungsglied geregelt ist, in welchem Gehäuse ein Lagerbock (16) fest angeordnet ist, an welchem Lagerbock mittels Lagern eine Welle gelagert ist, an welcher Welle das Magazin (20) und ein Ende des Federglieds (23) befestigt ist, und das andere Ende des Federglieds (23) an dem Lagerbock (16) befestigt ist, daß der Impulsgeber (24) für Ermittlung der Drehung der Welle fest am Lagerbock befestigt ist und daß der Lagerbock ein Lager hat das den Impulsgeber von dem Magazin separiert, und daß das Magazin, der Impulsgeber, das Federglied, der Lagerbock und die Welle alle in dem Gehäuse eingeschlossen sind.

## Revendications

1. Agencement de commande d'éléments d'amortissement incorporés dans un système de suspension entre une masse non amortie et amortie (7,8) comprenant, au moins, un jeu d'un élément d'amortissement réglable (5) et d'un élément élastique (6) monté en parallèle, ledit élément élastique étant réglé au moyen d'un signal representant d'un déplacement, détecté par un capteur (9), entre la masse non amortie (8) et amortie (7), le capteur (9) étant monté de façon fixe sur l'une (7) des deux masses (7,8) et comprenant un fil ou chaîne, enroulé autour d'un magasin rotatif (20) sous la précontrainte d'un élément élastique (23) agissant contre la rotation du magasin (20), dans lequel le fil ou la chaîne, à son extrémité qui est tirée du magasin (20) est agencé pour être fixé au moyen d'éléments d'accouplement (11,12) sur la seconde masse (8), et le magasin rotatif (20) étant conçu pour agir sur un émetteur d'impulsions (24) en fonction de la rotation du magasin (20), ledit émetteur d'impulsions (24) créant un signal éléctrique por commander l'élément d'amortissement (5), caractérisé en ce que la masse non amortie (7) est une châssis d'un camion et la masse amortie (8) est une cabine d'un camion, et que le capteur comprend un boîtier (15) agencé dans la cabine du camion (8), et les éléments d'accouplement sont fixés à la châssis du camion, ledit capteur étant couplé electriquement à une unité de commande (2), par laquelle l'élément d' amortissement est commandé, un support (16) étant fixé dans le boîtier, ledit support portant une arbre au moyens formant palier (22), le magasin (20) et une extrémité de l'élément élastique étant serrés sur ladite arbre, l'autre extrémité de l'élément élastique étant serré sur le support, l'émmeteur d'impulsions (24) étant monté de façon fixe sur le support pour détecter la rotation de l'arbre, ledit support comprenant des moyens formant palier qui sépare le magasin de l'émmeteur d'impulsions, ledit magasin, ledit émmeteur d'impulsions, ledit élément élastique, ledit support est ladite arbre toutes sont incorporés dans le boîtier.
